# EUROPEAN PATENT SPECIFICATION

(11) **EP 1 704 081 B1**
(45) Date of publication and mention of the grant of the patent: **25.02.2009**
(21) Application number: 04801174.6
(22) Date of filing: 09.12.2004
(51) Int. Cl.: B62D 55/104

(54) **VEHICLE WITH AN UNDER-CARRIAGE PROVIDED WITH CRAWLER BELTS**
FAHRZEUG MIT EINEM MIT RAUPENKETTEN VERSEHENEN UNTERBAU
VEHICULE DOTE D'UN TRAIN ROULANT EQUIPE DE BANDES DE CHENILLES

(30) Priority: 11.12.2003 DK 200301834
(43) Date of publication of application: 27.09.2006
(73) Proprietor: E. FALCK SCHMIDT A/S, 5000 Odense C (DK)
(72) Inventor: SCHMIDT, Michael, Falck, DK-5300 Kerteminde (DK)
(74) Representative: Nielsen, Leif
(86) International application number: PCT/DK2004/000850
(87) International publication number: WO 2005/056374

(56) References cited:
- EP-A1- 0 360 640
- CA-A1- 2 388 294
- DE-A1- 4 005 356
- JP-A- 63 203 483
- SE-B- 378 390

## Description

The present invention relates to a vehicle with an under-carriage provided with crawler belts that at the foremost og hindmost end has a protruding part, and where the belts are split into a foremost section, that is placed under the foremost protruding part, and a hindmost section that is placed under the hindmost protruding part.

Such under-carriages that are provided with crawler belts are being used for many purposes and has the advantage over under-carriages that are equipped with wheels, that crawler belts exerts a relatively lower surface pressure on the support. Under-carriages provided with crawler belts are therefore widely used on vehicles/mobile units that are performing in terrain, including terrain with soft subsoil and terrain with large changes in rise.

Usually, under-carriages are provided with a right and a left belt. To achieve a narrow construction, the two belts can be placed under the under-carriage. This will however lead to the fact that the total height of the construction becomes at least the sum of the height of the under-carriage and the height of the belts. It is thus advantageous that the belts are split into a foremost section that is placed under the foremost protruding part, and a hindmost section that is placed under the hindmost protruding part. In this manner the under-carriage itself can be lowered down between the belt sections in such a manner that the total height of the construction are decided by the height of the belts plus (only) the height of the protruding parts. An example of such under carriages is given by document CA-A-2388294, which content is taken as preamble of claim 1.

According to the invention, it is advantageous that at least one of the belt units are suspended in a manner where it is vertically moveable, e.g. in a about a horizontal axis pivotable tilting joint. In this manner, the under-carriage can be lifted free when passing the top of a hill.

The invention will in the following be explained further with relation to the drawing, where:
- Fig. 1: shows a known construction of a under-carriage; and
- Fig. 2-5: different embodiments for the construction of a under-carriage according to the present invention.

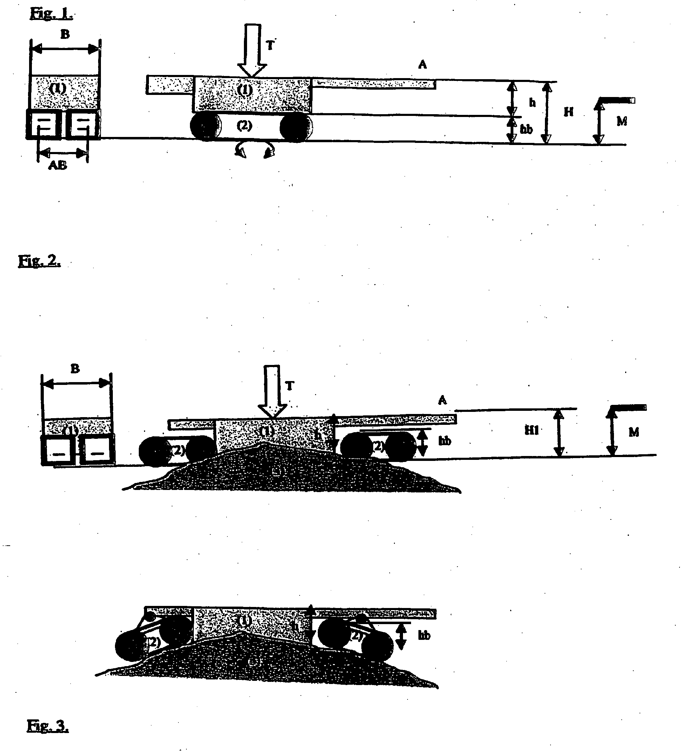

Fig. 1 shows a known embodiment for the under-carriage of a vehicle equipped with crawler belts. The under-carriage has, by its foremost and hindmost end, a protruding part. The length of the belts 2 is adapted to the line of gravity of the under-carriage 1, that even when driving on the highest possible pitch, must be within the carry-length of the belts.

The width of the belts 2 is limiting how slim the construction can be built. To make the total width B as small as possible, the belts are placed under the under-carriage.

This implies that the total height H of the construction is at least equal to the sum of the height h of the the under-carriage 1 and the height hb of the belts 2. The vehicle can not pass a height M that is less than H.

Another problem with the shown, known construction is the necessary tractive force when the vehicle is turning by changing the relative velocity of the two belts. This tractive force grows inversely proportional to the distance AB between the two belts. When the belts are very close - which is the case when the width B is to be minimised - the necessary tractive force is very big.

The problem of height is solved by the construction shown in fig. 2 where the belts are split into a foremost section that is placed under the foremost protruding part, and a hindmost section that is placed under the hindmost protruding part, while the under-carriage 1 is lowered down between the belt sections. In this case, the total height H1 of the construction is determined by only the height of the protruding part plus the height of the belts hb.

As seen in fig. 2, the shown construction is able to move in flat terrain. When having to pass e.g. the top of a hill 3, two problems arise. The under-carriage 1 impacts with the surface because of the low construction. And the belts does not assume a plane position on the surface which will make the surface pressure on the underground considerable. Parts of the belts will be "floating" in air.

This last problem is solved in that each belt section is suspended in a about a horizontal axis pivotable joint in such a manner that each section adjusts to the terrain as it is shown in fig. 3.

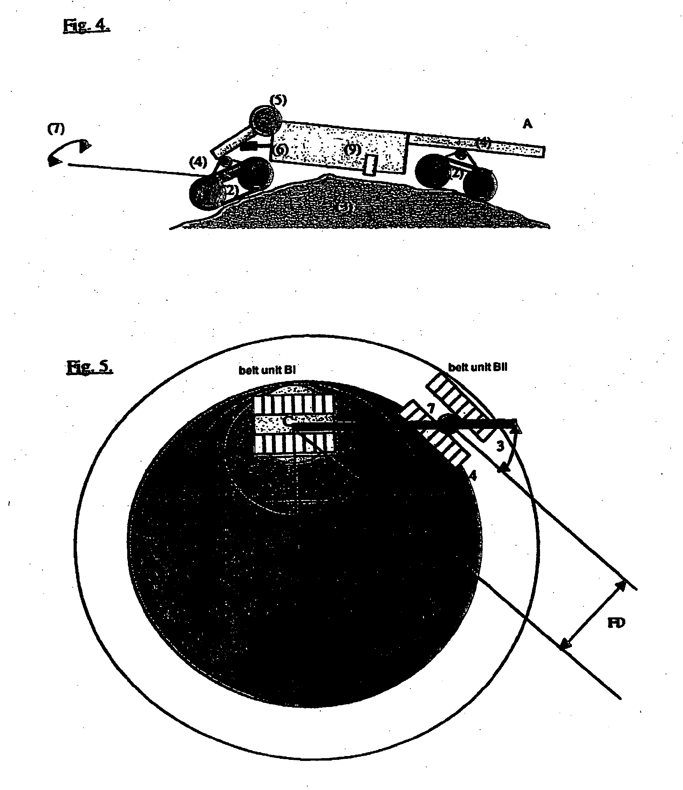

The problem related to the passage of the lowered under-carriage over the top of the hill can according to the invention be solved by having at least one of the belt units suspended in a vertically moveable, e.g. in a about a horizontal axis pivotable tilting joint as shown in fig. 4. This tilting joint assure that the under-carriage can be lifted free of the underground. The control of the tilting joint is achieved e.g. by means of a cylinder 6.

## Claims

1. "Vehicle with an under-carriage (1) provided with crawler belts **characterized in that** said vehicle by the foremost and hindmost end has a protruding part, and where the belts (2) are split into a foremost section that is placed under the foremost protruding part, and a hindmost section that is placed under the hindmost protruding part, and that at least one of the belt units is suspended vertically moveable, in a about a horizontal axis pivotable tilting joint (5)".

## Patentansprüche

1. Fahrzeug mit einem mit Raupen (2) versehenen Fahrgestell (1), **dadurch gekennzeichnet, dass** der Fahrzeug an dem Vorderende und dem Hinterende einen vorspringenden Teil aufweist, und wobei die Raupen (2) in einen unter dem vorderen vorspringenden Teil angeordneten Vorderabschnitt und einen unter dem hinteren vorspringenden Teil angeordneten Hinterabschnitt aufgeteilt sind, und dass wenigstens eine von den Raupeneinheiten senkrecht in einem um eine waagerechte Achse schwenkbaren Kippgelenk (5) aufgehängt ist.

## Revendications

1. Véhicule doté d'un train roulant (1) équipé de bandes de chenilles **caractérisé en ce que** ledit véhicule à l'extrémité avant et à l'extrémité arrière comporte une partie en saillie, et les bandes (2) sont divisées en une section avant extrême qui est positionnée sous la partie avant extrême en saillie, et une section arrière extrême qui est positionnée sous la partie arrière extrême en saillie, et qu'au moins une des entités de bande est suspendue de façon mobile verticalement, dans une articulation basculante (5) pivotant autour d'un axe horizontal.
